Europäisches Patentamt

European Patent Office

Office européen des brevets

(11) Publication number: **0 229 997**
**A1**

(12) # EUROPEAN PATENT APPLICATION

(21) Application number: **86117480.3**

(22) Date of filing: **16.12.86**

(51) Int. Cl.⁴: **B 23 Q 11/10**

(30) Priority: **16.12.85 JP 281003/85**

(43) Date of publication of application: **29.07.87**
**Bulletin 87/31**

(84) Designated Contracting States: **CH DE FR GB IT LI NL**

(71) Applicant: **KITAMURA MACHINERY CO.,LTD.,**
**1870 Toide-Komyoji, Takaoka-shi Toyama-ken (JP)**

(72) Inventor: **Kitamura, Koichiro, 3-11-5 Ekinan, Takaoka-shi**
**Toyama-ken (JP)**

(74) Representative: **Patentanwälte Ruff und Beier,**
**Neckarstrasse 50, D-7000 Stuttgart 1 (DE)**

(54) **Cutting oil filter apparatus.**

(57) In a machine tool including a spindle head (1), a spindle (6) attached to the spindle head (1), a tool (8) attached to the spindle (6) and a cutting liquid filter apparatus, the cutting liquid filter apparatus comprising a tank (10) for containing cutting liquid, a strainer unit (13) for filtering the cutting liquid, a pump (19) for supplying the cutting liquid from the tank (10) to the strainer unit (13) so that the cutting liquid can be filtered by the strainer unit (13), means (22, 23, 24, 25) for feeding the cutting liquid from the pump (19) to the tool (8), the strainer unit (13) being placed out of the tank (10).

TITLE OF THE INVENTION

CUTTING OIL FILTER APPARATUS

BACKGROUND OF THE INVENTION

This invention relates to a cutting liquid filter apparatus for a machine tool.

In a machine tool, water soluble liquid and oily liquid are used as cutting liquid. The cutting liquid is filtered by a strainer placed in a tank for containing the cutting liquid.

Chips and dusts in the cutting liquid are apt to be adhered to the strainer so that the strainer is blocked by them. As a result, a pump load increases. In such a case, the strainer must be removed from the tank and cleaned. However, as the strainer is set in the tank, it takes a long time for doing so.

SUMMARY OF THE INVENTION

The object of this invention is to provide a cutting liquid filter apparatus for a machine tool in which a strainer can be easily cleaned for the purpose of protecting a pump.

1

0229997

According to this invention, there is provided a cutting liquid filter apparatus for a machine tool comprising a tank for containing cutting liquid such as cutting oil, a strainer unit for filtering the cutting liquid, a pump for supplying the cutting liquid from the tank into the strainer unit so that the cutting liquid can be filtered by the strainer unit, the strainer unit being placed out of the tank.


BRIEF DESCRIPTION OF THE DRAWINGS


Fig. 1 is a front view showing a machine tool equipped with a cutting liquid filter apparatus according to this invention;

Fig. 2 is a sectional view showing the cutting liquid filter apparatus shown in Fig. 1;

Fig. 3 is a front view showing a strainer unit used in the cutting liquid filter apparatus of Fig. 2; and

Fig. 4 is a sectional view showing the strainer unit shown in Fig. 3.

2

## BRIEF DESCRIPTION OF THE PREFERRED EMBODIMENT

A strainer unit 13 is placed out of a tank 10. The cutting liquid 9 in the tank 10 can be filtered by a strainer unit 10.

If a strainer 30 set in the strainer unit 13 is blocked by or filled with chips and dust, only the strainer 30 can be detached from the strainer unit 13 for the cleaning purpose.

## DETAILED DESCRIPTION OF THE PREFERRED EMBODIMENT

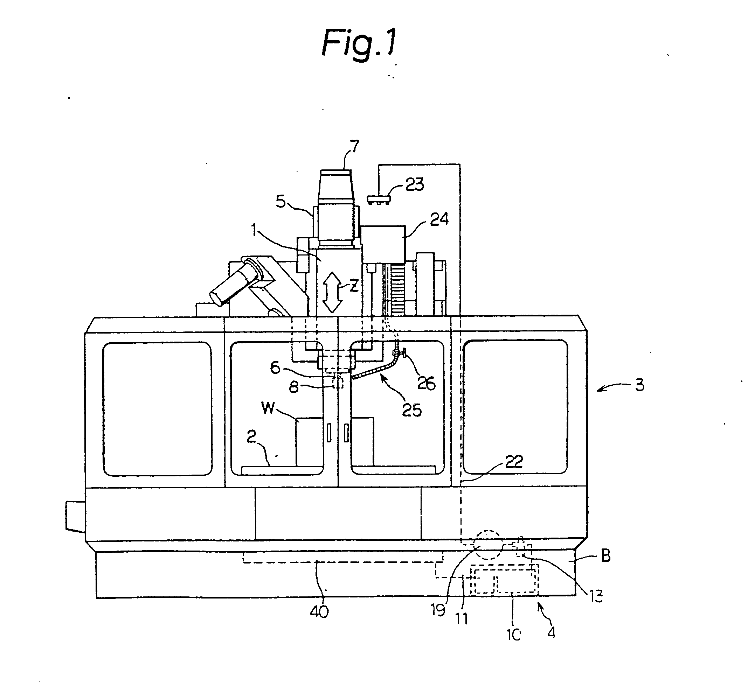

Fig. 1 shows a machine tool equipped with a cutting liquid filter apparatus according to this invention.

The machine tool includes a spindle head 1, a XY table 2, a splash guard 3 and a cutting liquid filter apparatus 4.

The spindle head 1 can move in the direction of the arrow Z by means of a motor 5. A spindle 6 is attached to the spindle head 1 and can rotate by means of a motor 7. A tool 8 is attached to the spindle 6. A workpiece W is set onto the XY table 2. The cutting liquid filter apparatus 4 is placed in a

3

base B of the machine tool.

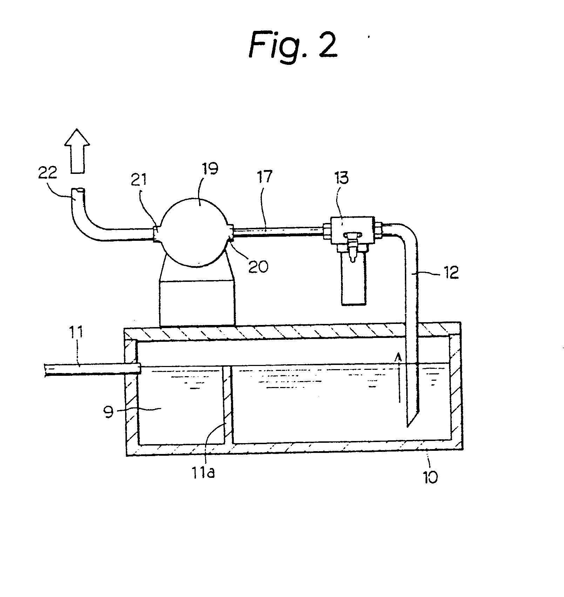

In Fig. 2, the cutting liquid 9 is contained in a tank 10 in which a partition 11a is provided. One end of a pipe 11 is joined to a side portion of the tank 10. A pipe 12 extends downwardly into the tank 10. The lower end of the pipe 12 is inserted into the cutting liquid 9.

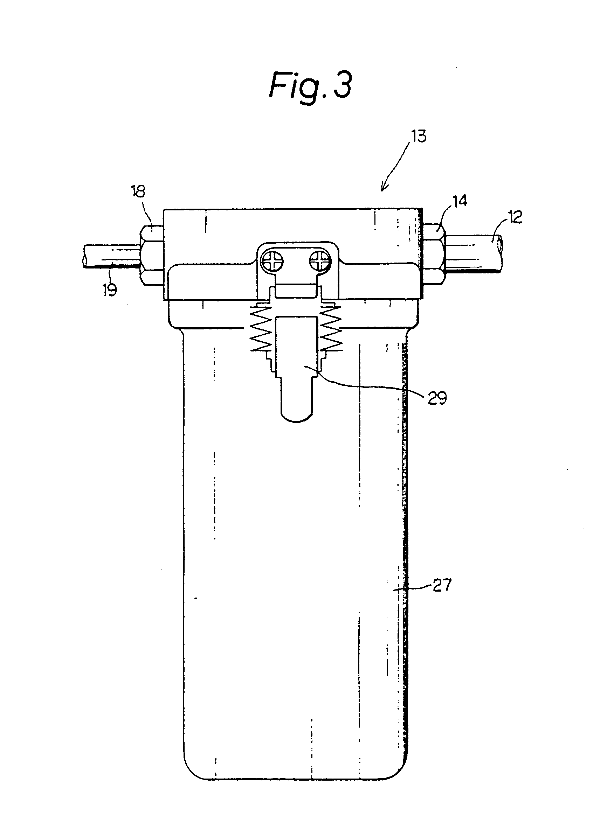

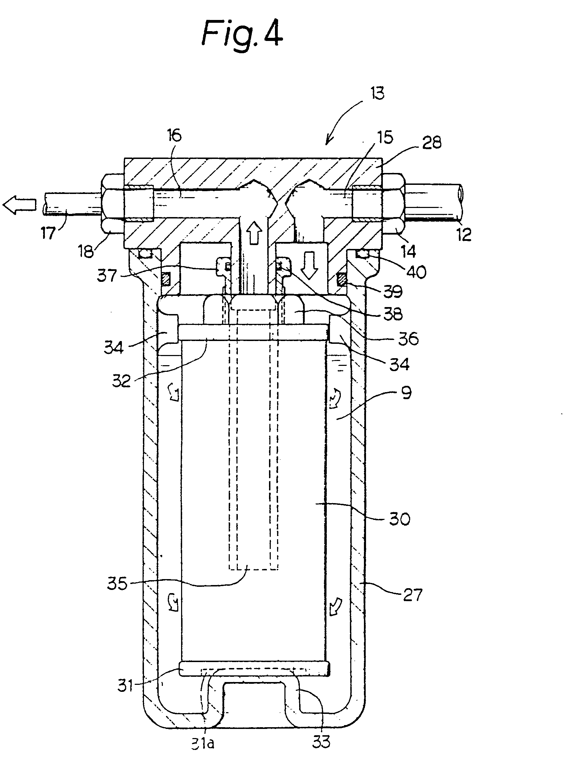

As shown in Figs. 3 and 4, the upper end of the pipe 12 is joined to a passage 15 through a connector 14. A passage 16 in the strainer unit 13 is joined to one end of a pipe 17 through a connector 18. The other end of the pipe 17 is joined to an entrance port 20 of the pump 19 as shown in Fig. 2. The exit 21 of the pump 19 is joined to one end of a pipe 22. The other end of the pipe 22 is joined to a nozzle 23 as shown in Fig. 1. A tank 24 is positioned directly under the nozzle 23. The tank 24 is fixed to the spindle head 1. An upper end of a flexible hose 25 is connected to the tank 24. A valve 26 is placed at an intermediate portion of the flexible hose 25. The lower end of the flexible hose faces the tool 8.

A tray 40 is positioned directly under the XY table 2 so as to receive the cutting liquid discharged from the nozzle 23 when a workpiece W is machined.   The lower end of the pipe 11 is joined to the tray 40.

Referring to Figs. 3 and 4, the strainer unit 13 will be explained in detail.

A strainer container 27 and a head 28 can be detachably fixed to each other by a locking means 29.

The head 28 includes the passages 15 and 16.   The passage 15 is connected to the strainer container 27.   A strainer 30 is placed in the strainer container 27.   The strainer 30 is preferably cylindrical.   A pair of metallic disks 31, 32 are attached to the top and bottom portions of the strainer 30.   A bottom portion 33 of the strainer container 27 has an inwardly projecting portion 33 which is inserted in a recess portion 31a of the disk 31.   The disk 32 is supported by a support 34 formed in the strainer container 37.

A pipe 35 is inserted into the strainer 30.   An upper end of the pipe 35 is provided with a hexagonal member 36.   This hexagonal member 36 is arranged so as to contact the disk 32.   A joint member 37 is placed between the member 36 and the head 28.

5

An O-ring 38 is set between the joint member 37 and the head 28. The upper end of the pipe 35 is joined to the passage 16.

Two O-rings 39 and 40 are provided between the head 28 and the strainer container 27.

In operation, the tool 8 rotates and the spindle head 1 moves down so that the workpiece W can be machined.

As the tank 24 is attached to the spindle head 1, the spindle head 1 moves together with the tank 24 and the flexible hose 25 in the direction of the arrow Z. While the tool 8 machines the workpiece W, the pump 19 operates and the valve 26 is opened so that the cutting liquid is discharged onto the tool 8.

The used cutting liquid is dirty, including dust and chips. The dirty cutting liquid is introduced into the tank 10 through the tray 40 and the pipe 11 as shown in Figs. 1 and 2. When the cutting liquid 9 is received by the tank 10, the large chips fall down to the bottom of the tank 10 while the cutting liquid 9 flows over the partition 11a. After that, the cutting liquid 9 is supplied into the strainer unit 13 through the pipe 12 by

6

0229997

means of the pump 19.   Further, the cutting liquid 9 flows through the passage 15, the strainer 30, the pipe 35 and the passage 16 in the direction of the arrows as shown in Fig. 4. Small chips and dust contained in the cutting liquid 9 can be separated from the liquid by the strainer 30.

The clean cutting liquid is returned to the tank 24 from the nozzle 23 (Fig. 1) by way of the pipe 17, the pump 19 and the pipe 22.

If the strainer 30 is blocked by dust and chips so that it must be exchanged for a new strainer, the locking means 29 is released so as to open the head 15.   After the strainer 30, the pipe 35 and the member 36 are pulled out, the strainer 30 can be easily cleaned.   This strainer 30 can be again used.

7

CLAIMS

1. In a machine tool including a spindle head (1), a spindle (6) attached to the spindle head (1), a tool (8) attached to the spindle (6) and a cutting liquid filter apparatus, the cutting liquid filter apparatus comprising a tank (10) for containing cutting liquid, a strainer unit (13) for filtering the cutting liquid, a pump (19) for supplying the cutting liquid from the tank (10) to the strainer unit (13) so that the cutting liquid can be filtered by the strainer unit (13), means (22, 23, 24, 25) for feeding the cutting liquid from the pump (19) to the tool (8), the strainer unit (13) being placed out of the tank (10).

2. The cutting liquid filter apparatus of Claim 1, wherein the cutting liquid filter apparatus (4) is placed in a base (B) of the machine tool.

3. The cutting liquid filter apparatus of Claim 1 or 2, wherein a partition (11a) is provided in the tank (10) so that the cutting liquid can flow over the partition (11a).

4. The cutting liquid filter apparatus of one of the Claims 1 to 3, wherein the strainer unit (13) is connected to the

8

cutting liquid (9) in the tank (10) by means of a pipe (12).

5.  The cutting liquid filter apparatus of one of the Claims 1 to 4, further comprising a XY table (2) for holding a workpiece (W) in such a way that the workpiece (W) can be machined by the tool (8), a tray (40) placed directly under the XY table (2), and a pipe (11) for connecting the tray (40) with the tank (10).

6.  The cutting liquid filter apparatus of one of the Claims 1 to 5, wherein the strainer unit (13) comprises a strainer container (27) having an open end, a head (28), locking means (29) for fixing detachably the strainer container (27) to the head (28), a strainer (30) placed in the strainer container (27), a strainer pipe (35) inserted into the strainer (30), the head (28) having a first passage (15) joined to the open end of the strainer container (27) and a second passage (16) joined to one end of the strainer pipe (35), the other end of the strainer pipe (35) being open in the strainer (30) whereby the cutting liquid can flow from the first passage (15) to the second passage (16) through the strainer (30) and the strainer pipe (35).

7.  The cutting liquid filter apparatus of Claim 6, wherein the

9

strainer (35) is cylindrical and held between and by a pair of disks (31, 32).

8. The cutting liquid filter apparatus of Claim 7, wherein one (31) of the disks (31, 32) has a recess portion (31a) into which an inwardly projecting portion (33) of a bottom of the strainer container (27) is inserted.

# Fig.1

*Fig. 2*

0229997

# Fig.3

# Fig.4

0229997

European Patent
Office

**EUROPEAN SEARCH REPORT**

Application number

EP 86 11 7480

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 160 587 (WARING) * Column 1, lines 19-22 * | 1,5 | B 23 Q 11/10 |
| Y | | 2,3,7 | |
| Y | DE-A-3 311 187 (SCHÖLKOPF) | 2,7 | |
| A | | 8 | |
| Y | FR-A- 907 289 (MULLER) | 3 | |
| A | GB-A- 602 698 (KISCH) | 1 | |
| A | GB-A- 565 130 (ELLIS) | 1 | TECHNICAL FIELDS SEARCHED (Int. Cl.4) |
| A | DE-C- 610 207 (VOMAG) | 2 | B 23 Q B 24 B |

The present search report has been drawn up for all claims

| Place of search THE HAGUE | Date of completion of the search 01-04-1987 | Examiner DE GUSSEM J.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82